# EUROPÄISCHE PATENTSCHRIFT

(11) **EP 2 449 671 B1**
(45) Veröffentlichungstag und Bekanntmachung des Hinweises auf die Patenterteilung: **23.10.2013**
(21) Anmeldenummer: 10725982.2
(22) Anmeldetag: 01.06.2010
(51) Int. Cl.: H02P 5/46, H02P 5/50, H02K 11/04, H05K 7/14, G05B 19/418

(54) **ELEKTROMOTOR UND ANLAGE MIT ELEKTROMOTOREN**
ELECTRIC MOTOR AND INSTALLATION COMPRISING ELECTRIC MOTORS
MOTEUR ÉLECTRIQUE ET INSTALLATION ÉQUIPÉE DE MOTEURS ÉLECTRIQUES

(30) Priorität: 01.07.2009 DE 102009031466
(43) Veröffentlichungstag der Anmeldung: 09.05.2012
(73) Patentinhaber: SEW-EURODRIVE GmbH & Co. KG, 76646 Bruchsal (DE)
(72) Erfinder: WIEST, Matthias, 76275 Ettlingen (DE)
(86) Internationale Anmeldenummer: PCT/EP2010/003330
(87) Internationale Veröffentlichungsnummer: WO 2011/000456

(56) Entgegenhaltungen:
- DE-A1- 10 108 548
- DE-A1- 10 238 332
- DE-A1- 19 816 170
- DE-A1- 19 905 952
- DE-A1- 19 908 045
- DE-B- 1 170 524

## Beschreibung

Die Erfindung betrifft einen Elektromotor und eine Anlage mit Elektromotoren.

Bei Elektromotoren ist bekannt, die Anschlüsse zur elektrischen Versorgung in einem Anschlusskasten des Elektromotors vorzusehen.

Aus der DE 101 08 548 A1 ist eine Stellvorrichtung für einen Motor bekannt.

Aus der DE 199 05 952 C2 ist ein Verteilerkasten bekannt.

Aus der DE 19816170 C5 ist ein Steuerungsmodul bekannt.

Aus der DE 199 08 045 C2 ist ein Kabelsystem zur Verkabelung eines Umrichters mit einem Motor bekannt.

Aus der DE 102 38 332 A1 ist ein Steuermodul bekannt.

Der Erfindung liegt daher die Aufgabe zugrunde, die Bedienbarkeit und Wartungsfreundlichkeit bei Anlagen mit Elektromotoren zu verbessern.

Erfindungsgemäß wird die Aufgabe bei dem Elektromotor nach den in Anspruch 1 und bei der Anlage nach den in Anspruch 9 angegebenen Merkmalen gelöst.

Wichtige Merkmale der Erfindung bei dem Elektromotor sind, dass er einen Anschlusskasten aufweist, der ein auf dem Motorgehäuse befestigtes oder einstückig ausgeführtes Unterteil und ein darauf verbindbares Oberteil aufweist,
wobei an einer Seite des Unterteils mindestens zwei Hybridgegensteckverbinderteile angeordnet sind zur Steckverbindung mit entsprechenden Hybridsteckverbinderteilen, die an einem jeweiligen Hybridkabelende angeordnet sind,
wobei die im Hybridkabel geführten Leitungen im Unterteil vom ersten Hybridgegensteckverbinderteil zum zweiten Hybridgegensteckverbinderteil durchgeschleift sind,
die Hybridgegensteckverbinderteile zueinander parallel orientiert angeordnet sind.

Von Vorteil ist dabei, dass bei einer Anlage die Wartung und Bedienbarkeit verbessert ist. Denn die Antriebe werden alle von derselben Seite her bedienbar und somit einfacher bedienbar, da immer gleich bedienbar. Außerdem ist die Übersichtlichkeit verbessert. Durch die Verwendung von Hybridsteckverbinderteilen ist das Anschließen der verschiedenen Kabel schnell und einfach ausführbar. Mittels der Durchschleifungen ist eine Serie von Elektromotoren schnell und einfach verkabelbar. Insbesondere sind keine T-Stücke notwendig, da jeder Elektromotor ein T-Stück in sich integriert aufweist.

Bei einer vorteilhaften Ausgestaltung sind Unterteil und Motorgehäuseteil einstückig ausgebildet und nehmen zumindest ein Lager der Rotorwelle des Motors und/oder ein Lager der Abtriebswelle eines vom Motor angetriebenen Getriebes auf,

insbesondere so dass vom Umrichter, Motor und/oder Getriebe erzeugte Wärme aufnehmbar und verteilbar ist, insbesondere auch über das Unterteil an die Hybridsteckverbindergehäuseteile. Von Vorteil ist dabei, dass die Wärme der wärmeerzeugenden Komponenten aufspreizbar ist und somit Wärmespitzen der einzelnen Komponenten schnell abführbar sind. Außerdem sind im Unterteil die Hybridsteckverbinderteile angeordnet, so dass deren Gehäuseteile aus Metall ausführbar sind, wodurch die Wärme sogar vom Unterteil weiterleitbar ist an diese Gehäuseteile. Durch die Verteilung im Unterteil bedingt, ist die Anzahl dieser Gehäuseteile größer als Eins. Daher ist die an die Umgebung wärmeableitende Oberfläche de Motors vergrößert und somit die Wärmeableitung verbessert. Der Motor ist also vorzugsweise als Kompaktantrieb ausgeführt, bei dem der Umrichter seitlich zu den parallel angeordneten Wellen, also Rotorwelle und Abtriebswelle, angeordnet ist.

Bei einer vorteilhaften Ausgestaltung ist ein Busprotokollumsetzer aus der Durchschleifung der Kleinspannungsleitungen versorgt, der mit der Steuerelektronik elektrisch verbunden ist und an einem Feldbus angeschlossen ist, wobei der Busprotokollumsetzer derart ausgeführt ist, dass er aus dem Feldbus-Daten die für die Steuerelektronik bestimmten Daten an die Steuerelektronik übermittelt. Von Vorteil ist dabei, dass der Umsetzer aus einem T-Knoten im Anschlusskasten versorgt ist. Wichtig ist dabei, dass im Anschlusskasten eines Elektromotors ein T-Verteiler integriert ausgeführt ist, also eine Durchschleifung und somit ein Zugangs- und ein Abgangs-Steckverbinderteil angeordnet ist im beziehungsweise am Anschlusskasten.

Dabei ist der Abgangs-Hybridgegensteckverbinder weiblich und der Zugangs-Hybridgegensteckverbinder männlich ausgeführt.

Bei einer vorteilhaften Ausgestaltung umfassen die Hybridkabel jeweils mindestens Kleinspannungsleitungen und Niederspannungsleitungen, insbesondere wobei die Niederspannung mehr als 100 Volt beträgt, insbesondere wobei die Kleinspannung weniger als 50 Volt beträgt. Von Vorteil ist dabei, dass Steuerspannungen, wie 24 Volt, und auch Versorgungsspannungen für den Motor in einem einzigen Kabel vorsehbar sind.

Bei einer vorteilhaften Ausgestaltung umfassen die Hybridkabel jeweils zusätzlich zu Kleinspannungsleitungen und Niederspannungsleitungen zumindest eine Busleitung, insbesondere wobei im Unterteil eine als Busteilnehmer ausgestaltete elektronische Schaltung angeordnet ist. Von Vorteil ist dabei, dass der Aufwand an Verkabelung stark verringerbar ist.

Bei einer vorteilhaften Ausgestaltung weisen die Hybridgegensteckverbinderteile Kontaktteile, insbesondere Kontaktstifte, insbesondere nach außen weisende Kontaktstifte, für die Niederspannungsleitungen auf, die in einer gemeinsamen Linie angeordnet sind, welche parallel oder senkrecht zur Motorachse orientiert ist. Von Vorteil ist dabei, dass eine einfache Bedienbarkeit, eine hohe Übersichtlichkeit und ein geringer Raumbedarf erreichbar ist. Insbesondere ist der Raumbedarf senkrecht zu der Linie verringert.

Bei einer vorteilhaften Ausgestaltung weist jedes Hybridgegensteckverbinderteil Kontaktteile, insbesondere Kontaktstifte, insbesondere nach außen weisende Kontaktstifte, für Kleinspannungen auf die auf einer gedachten Gerade angeordnet sind, also in einer Linie angeordnet sind. Von Vorteil ist dabei, dass die Übersichtlichkeit erhöht ist und die Kleinspannung zusammen mit der Niederspannung verdrahtbar ist.

Bei einer vorteilhaften Ausgestaltung sind Unterteil und Oberteil zumindest mittels einer elektrischen Steckverbindung verbunden, über welche die Niederspannungsleitungen zu einer elektronischen Schaltung geführt sind, welche an der Innenseite des Oberteils befestigt ist,
insbesondere wobei die Statorwicklungsleitungen über die elektrische Steckverbindung zur elektronischen Schaltung geführt sind,
insbesondere wobei die elektronische Schaltung eine Umrichterschaltung, eine Sanftanlaufschaltung oder ein Stempunktschalter-Schaltung ist. Von Vorteil ist dabei, dass bei Ausfall der Elektronik im Oberteil dieses zusammen mit der Elektronik schnell und einfach austauschbar ist. Somit sind die Wartungskosten und der Wartungsaufwand gering.

Wichtige Merkmale bei der Anlage mit mindestens zwei Elektromotoren sind, dass die Hybridgegensteckverbinderteile der oder aller Motoren parallel zueinander orientiert sind.

Von Vorteil ist dabei, dass die Bedienbarkeit einfach ist, da, insbesondere bei einer langgestreckt ausgeführten Förderanlage, bei der die Antriebe in einer Reihe angeordnet sind, die Motoren stets von der gleichen Seite aus zu warten oder zu bedienen sind. Außerdem sind die Hybridsteckverbinder derart klein ausgeführt, dass sie beide auf einer gleichen Seite des Anschlusskastens anordenbar sind.

Bei einer vorteilhaften Ausgestaltung sind die Hybridgegensteckverbinderteile der oder aller Motoren in einer Linie angeordnet. Von Vorteil ist dabei, dass die Bedienbarkeit besonders einfach ist.

Bei einer vorteilhaften Ausgestaltung sind die Hybridgegensteckverbinderteile der oder aller Motoren von derselben Seite aus zugänglich. Von Vorteil ist dabei wiederum, dass die Bedienbarkeit besonders einfach ist.

Bei einer vorteilhaften Ausgestaltung treiben die Motoren ein Fördermittel, insbesondere dasselbe Fördermittel, an, insbesondere eine Rollenbahn oder Fließband. Von Vorteil ist dabei, dass die Inbetriebnahme, Bedienung und Wartung von derselben Seite der Förderanlage bei allen Antrieben ermöglicht ist.

Bei einer vorteilhaften Ausgestaltung ist der Leitungsquerschnitt der Niederspannungsleitungen derart klein, dass die beiden am Anschlusskasten angeordneten Hybridgegensteckverbinderteile nebeneinander in der gleichen Linie wie die Kontaktteile der Niederspannungsleitungen angeordnet sind an derselben Seite des Anschlusskastens. Von Vorteil ist dabei, dass zwar der Leitungsquerschnitt und somit der dauerhaft maximal erlaubte Strom gering ist und somit nur wenige Elektromotoren seriell versorgbar sind, also die Komplexität verringert ist, aber die Anbringung der Hybridgegensteckverbinderteile auf einer selben Seite des Anschlusskastens ermöglicht ist.

Bei einer vorteilhaften Ausgestaltung überragt der Anschlusskasten den Motor nicht, also die Seitenlänge des Anschlusskastens kleiner ist als der Durchmessers des Stators oder des den Stator umgebenden Motorgehäuses. Von Vorteil ist dabei, dass der Anschlusskasten nicht übergroß dimensioniert werden muss sonder in raumsparender Weise ausführbar ist.

Bei einer vorteilhaften Ausgestaltung beträgt die Anzahl der seriell mittels der Niederspannungsleitungen versorgbaren Elektromotoren weniger als zwanzig, insbesondere weniger zehn. Von Vorteil ist dabei, dass durch die Beschränkung der Zahl der seriell versorgbaren Elektromotoren die Hybridgegensteckverbinderteile auf derselben Seite des Anschlusskastens anbringbar sind. Der Leitungsquerschnitt beträgt also 2,5 mm^2 und dadurch ist die Menge der seriell versorgbaren Motoren entsprechend begrenzt.

Weitere Vorteile ergeben sich aus den Unteransprüchen.

### Bezugszeichenliste

- 1: Hybridsteckverbinderteil
- 2: Steckverbinderteil für Datenbus
- 3: Elektromotor
- 4: Unterteil des Anschlusskastens
- 5: Oberteil des Anschlusskastens
- 6: Bedienelement zur Drehzahlvorgabe
- 7: Hybridleitung
- 8: Datenbusleitung
- 9: Anschlusskastenoberteil
- 10: Datenbus-Knoten
- 40: Kühlfinger

Die Erfindung wird nun anhand von Abbildungen näher erläutert:

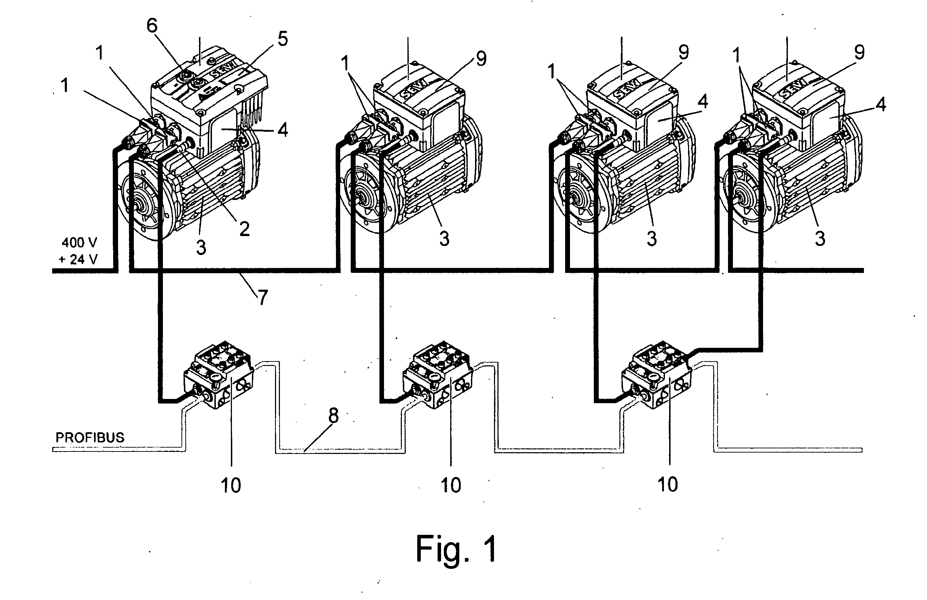

In der Figur 1 ist ein erfindungsgemäßes System schematisch skizziert.

Dabei umfasst die Hybridleitung 7 Niederspannungs-Versorgungsleitungen für den Elektromotor 3 und Kleinspannungs-Versorgungsleitungen für Elektronik.

Dabei sind die Niederspannungs-Versorgungsleitungen als Drehstromleitungen, insbesondere mit einer Spannung von mehr als 100 Volt, ausgeführt und die Kleinspannungs-Versorgungsleitungen für weniger als 50 Volt, insbesondere als 24 Volt Leitungen zur Versorgung von Steuerelektronik.

Der Elektromotor 3 weist einen Anschlusskasten auf, welcher ein auf dem Motorgehäuse angesetzter oder einstückig verbundener Anschlusskastenunterteil 4 und ein darauf aufgesetztes Oberteil 5 beziehungsweise alternativ ein Anschlusskastenoberteil 9 auf. Im Oberteil 5 ist ein Umrichter vorgesehen zur Versorgung des Elektromotors 3. Im Oberteil 9 hingegen ist keine Elektronik vorgesehen.

Im Unterteil 4 sind-Anschlussvorrichtungen vorgesehen, an die die Statorwicklungsleitungen des Motors 3 herangeführt und elektrisch verbunden werden.

Die Hybridleitung 7 wird mit einem ersten Hybridsteckverbinderteil 1 in ein entsprechendes, mit dem Unterteil 4 verbundenen Hybridgegensteckverbinderteil steckverbunden. Die Versorgungsleitungen, also Niederspannungs-Versorgungsleitungen und analog auch die Kleinspannungs-Versorgungsleitungen werden einem T-Verteiler zugeführt, der vom Unterteil 4 umgeben ist. Dies bedeutet, dass die Versorgungsleitungen einerseits durchgeschleift werden und an einem weiteren Hybridgegensteckverbinderteil aus dem Anschlusskasten herausgeführt sind. In das weitere Hybridgegensteckverbinderteil wird wiederum eine von außen kommende Hybridleitung 7 mittels eines entsprechenden Hybridsteckverbinderteils elektrisch verbunden.

An den im Unterteil durchgeschleiften Leitungen ist eine jeweilige elektrische Abzweigung ausgebildet, also ein T-Knoten elektrisch ausgeführt.

Somit ist eine serielle Versorgung der Motoren 3 ermöglicht.

In Figur 1 wird im ersten Motor 3 die Abzweigung der Niederspannungs-Versorgungsleitungen, also Drehstromleitungen, über eine Steckverbindung zur an der Innenseite des Oberteils 5 vorgesehenen Umrichterelektronik geführt. Von dieser wird ein Drehspannungssystem erzeugt, das über die Steckverbindung an die Anschlussvorrichtungen im Unterteil 4 geführt wird und somit die Statorwicklung speist.

Die Kleinspannungs-Versorgungsleitungen werden von der Abzweigung über die Steckverbindung zum Oberteil 5 geführt.

An der Außenseite des Oberteils ist ein Bedienelement 6 zur Drehzahlvorgabe angeordnet, so dass die Drehzahl des Motors einstellbar ist.

Die Hybridgegensteckverbinderteile sind an derselben Seite des Unterteils angeordnet. Dabei weist das Unterteil einen im Wesentlichen rechteckförmigen oder quadratischen Grundriss auf, wobei das Unterteil das Motorgehäuse nicht überragt.

Die Datenbusleitung 8 wird einem Busprotokollumsetzer 10 zugeführt, in welchem einerseits die Datenbusleitung 8 durchgeschleift vorgesehen ist und außerdem die für den verbundenen Antrieb, also umfassend den vom Busprotokollumsetzer 10 anzusteuernden Motor 3, vorgesehenen Daten in ein anderes Protokoll umgesetzt werden und diese Informationen dann über eine Datenleitung mit ihrem Steckverbinderteil 2 an ein entsprechendes, am Anschlusskasten vorgesehenes Daten-Gegensteckverbinderteil steckverbindbar ist. Die Datenleitung wird im Unterteil wiederum über die zwischen Oberteil 5 und Unterteil 4 vorgesehene Steckverbindung an die an der Innenseite des Oberteils 5 angeordnete Elektronik geführt.

Die Energie-Versorgung des Busprotokollumsetzers 10 erfolgt aus einer Kleinspannungsleitung, die ebenfalls am T-Knoten der Durchschleifung der Kleinspannungsleitungen im Anschlusskasten des Motors angeschlossen ist.

Die Querschnitte der elektrischen Niederspannungs-Leitungen und auch die Querschnitte der Klein-Spannungsleitungen sind derart klein ausgeführt, dass nur eine kleine Anzahl von Motoren 3 seriell versorgbar sind, vorzugsweise weniger als 20 oder sogar nur weniger als 10 Motoren 3.

Dabei ist der Leitungsquerschnitt gerade so groß gewählt, insbesondere mit 2,5 mm^2, dass die Steckverbinderteile 1 derart klein ausführbar sind, dass alle Steckverbinderteile auf eine selbe Seite des Unterteils anordenbar sind. Hierbei ist wichtig, dass bei der Steckverbindung Isolationsabstände zu beachten sind und daher die Steckverbinder eine Mindestgröße aufweisen. Wichtig ist dabei auch, dass die einzelnen Steckerstifte für die Niederspannungsleitungen in einer gedachten Gerade oder Linie angeordnet sind, die parallel zur Unterkante des Anschlusskastens, insbesondere senkrecht zur Achse des Motors, angeordnet sind. Somit bestimmen diese Stifte und die notwendigen Isolationsabstände die notwendige Mindestbreite des Anschlusskastens.

Wichtig ist hierbei, dass die Kleinspannungsebene und die Niederspannungsebene räumlich getrennt sind und einen genügend großen Abstand bezüglich Luft- und Kriechstrecken aufweisen. Hierzu ist ein genügend großer Abstand vorgesehen zwischen Kleinspannungen und Niederspannungen, wobei die zugehörigen Kontaktstifte in einer jeweiligen Ebene angeordnet sind, also in einer Linie.

In Figur 1 weisen der zweite, dritte und vierte Motor 3 einen Anschlusskasten mit einem anderen Oberteil 9 auf im Gegensatz zum ersten Motor 3, der einen Anschlusskasten mit einem anderen Oberteil 5 aufweist. Bei diesem zweiten, dritten und vierten Motor 3 ist im Unterteil 4 des Anschlusskastens ein Motorschalter angeordnet, der den Sternpunkt der in Sternschaltung ausgeführten Statorwicklung unterbricht. Somit ist keine Steckverbindung zum Oberteil hin notwendig. Der Motorschalter wird von einer Ansteuerelektronik angesteuert, die eine Datenbusverbindung aufweist, welche über das Steckverbinderteil 2 nach außen, also zur Datenbusleitung 8 hin, geführt ist.

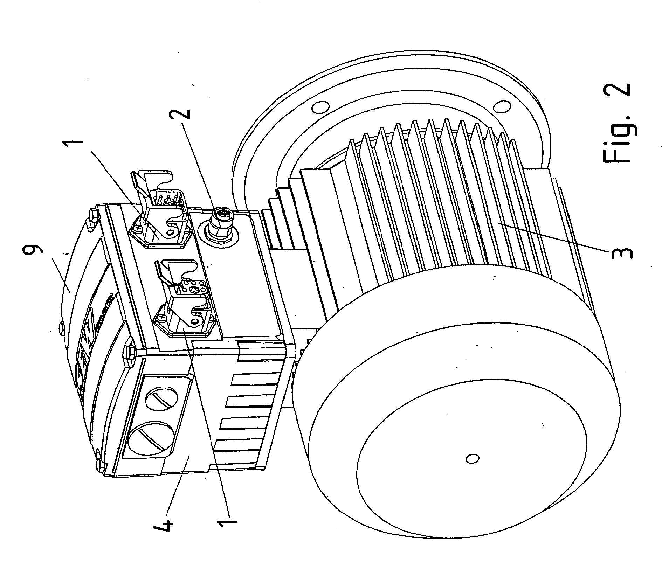

In der Figur 2 ist ein Motor 3 näher gezeigt, wobei im Anschlusskasten ein Sternpunktschalter angeordnet ist und die Hybridgegensteckverbinder 1 seitlich herausragen. Dabei sind die Kontaktstifte der Niederspannungsleitungen in einer Linie angeordnet, die parallel zur Achse des Motors angeordnet ist.

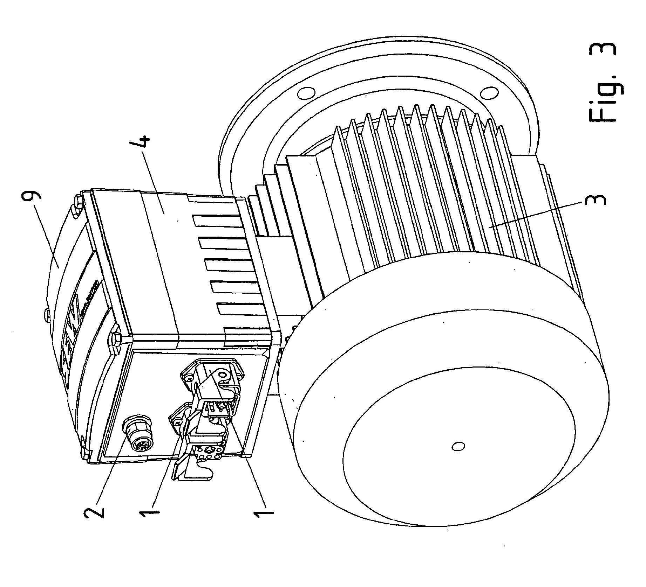

In der Figur 3 ist ein Motor 3 näher gezeigt, wobei im Anschlusskasten ein Sternpunktschalter angeordnet ist und die Hybridgegensteckverbinder 1 B-seitig herausragen, also axial hinten. Dabei sind die Kontaktstifte der Niederspannungsleitungen in einer Linie angeordnet, die senkrecht zur Achse des Motors angeordnet ist.

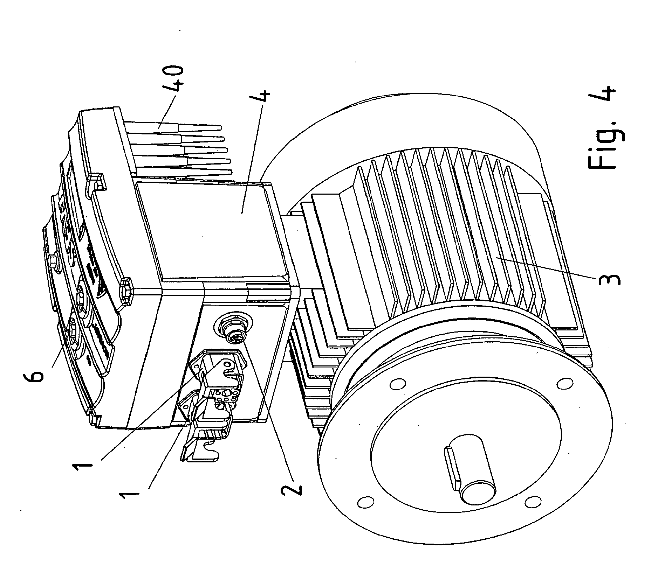

In der Figur 4 ist ein Motor 3 näher gezeigt, wobei im Anschlusskasten ein Umrichter angeordnet ist und die Hybridgegensteckverbinder 1 B-seitig herausragen, also nach axial hinten. Dabei sind die Kontaktstifte der Niederspannungsleitungen in einer Gerade, also Linie, angeordnet, die senkrecht zur Achse des Motors angeordnet ist. Das Oberteil 5 ragt über den Anschlusskasten hinaus und die Kühlfinger 40 erstrecken sich zum Motor hin.

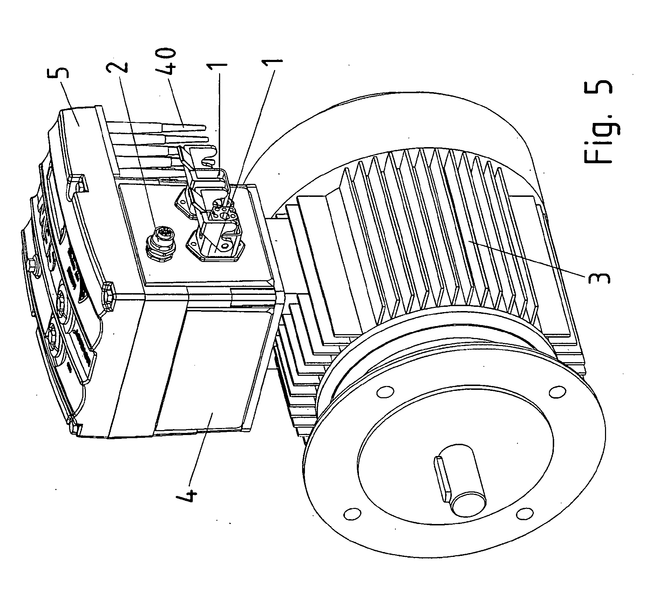

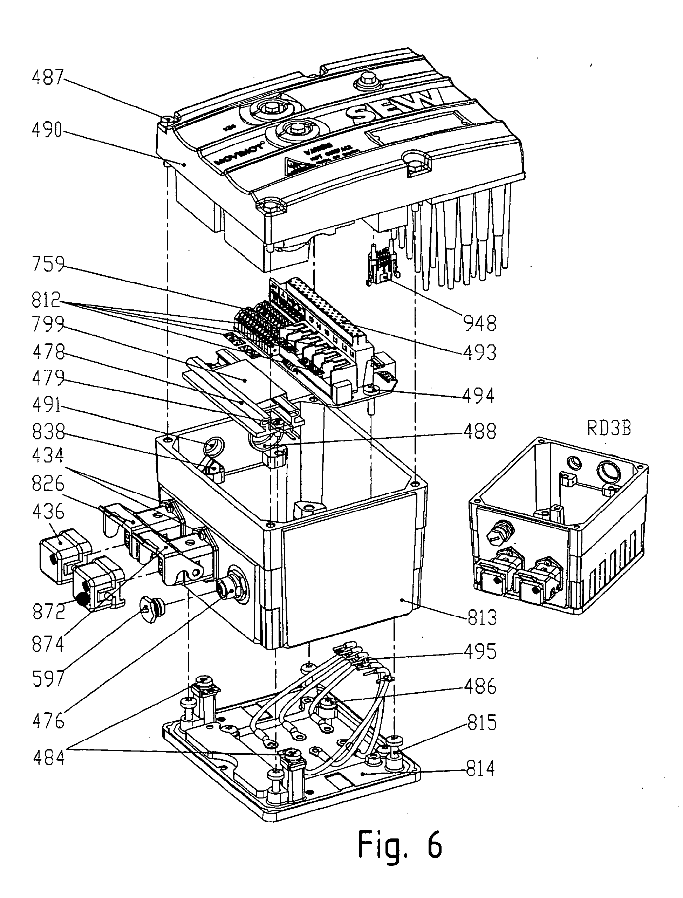

In der Figur 5 ist ein Motor 3 näher gezeigt, wobei im Anschlusskasten ebenfalls ein den Motor versorgender Umrichter angeordnet ist und die Hybridgegensteckverbinder 1 seitlich herausragen. Dabei sind die Kontaktstifte der Niederspannungsleitungen in einer Linie angeordnet, die parallel zur Achse des Motors angeordnet ist. Das Oberteil 5 ragt wiederum axial B-seitig über den Anschlusskasten hinaus und die Kühlfinger 40 erstrecken sich zum Motor hin.

Bei weiteren erfindungsgemäßen Ausführungsbeispielen wird auch die Datenbusleitung in die Hybridleitung integriert und die Hybridsteckverbinderteile entsprechend modifiziert.

Bei weiteren erfindungsgemäßen Ausführungsbeispielen ist in dem Datenbus-Knoten eine Busteilnehmer-Elektronik angeordnet, die als Abzweigung nur die für den Motor 3 bestimmten Daten herausfiltert und vorzugsweise in einem geänderten Bus-Protokoll über den Steckverbinder 2 an die Umrichterelektronik leitet.

## Patentansprüche

1. Elektromotor, umfassend einen Anschlusskasten, der ein auf dem Motorgehäuse befestigtes oder einstückig ausgeführtes Unterteil und ein darauf verbindbares Oberteil aufweist,
**dadurch gekennzeichnet, dass**
**nur** an einer **einzigen** Seite des Unterteils mindestens zwei Hybridgegensteckverbinderteile angeordnet sind zur Steckverbindung mit entsprechenden Hybridsteckverbinderteilen, die an einem jeweiligen Hybridkabelende angeordnet sind,
wobei die im Hybridkabel geführten Leitungen im Unterteil vom ersten Hybridgegensteckverbinderteil zum zweiten Hybridgegensteckverbinderteil durchgeschleift sind,
wobei eine elektronische Schaltung im Anschlusskasten angeordnet ist, die eine Steuerelektronik umfasst zur Ansteuerung von Leistungshalbleiterschaltern, welche den Energiefluss von den Leitungen, insbesondere Niederspannungsleitungen, des Hybridkabels zum Motor steuern,
wobei die Steuerelektronik aus der Durchschleifung der Hybridleitungen, insbesondere aus den Kleinspannungsleitungen, versorgt ist,
**wobei die Hybridgegensteckverbinderteile zueinander parallel orientiert angeordnet sind,**
**wobei die Anordnung der Hybridgegensteckverbinderteile auf derselben Seite des Anschlusskastens, ausgeführt mit entsprechend kleinen Leitungsquerschnitten und Isolationsabständen, eine Beschränkung der Anzahl der mittels der Durchschleifung seriell versorgbaren Elektromotoren, insbesondere auf weniger als zwanzig, insbesondere auf weniger als zehn, bewirkt.**

2. Elektromotor nach Anspruch 1,
**dadurch gekennzeichnet, dass**
Unterteil und Motorgehäuseteil einstückig ausgebildet sind und zumindest ein Lager der Rotorwelle des Motors und/oder ein Lager der Abtriebswelle eines vom Motor angetriebenen Getriebes aufnehmen,
insbesondere wobei Rotorwelle und Abtriebswelle parallel angeordnet sind,
insbesondere so dass vom Umrichter, Motor und/oder Getriebe erzeugte Wärme aufnehmbar und verteilbar ist, insbesondere auch über das Unterteil an die Hybridsteckverbindergehäuseteile.

3. Elektromotor nach einem der vorangegangenen Ansprüche,
**dadurch gekennzeichnet, dass**
ein Busprotokollumsetzer aus der Durchschleifung der Kleinspannungsleitungen versorgt ist, der mit der Steuerelektronik elektrisch verbunden ist und an einem Feldbus angeschlossen ist,
wobei der Busprotokollumsetzer derart ausgeführt ist, dass er aus dem Feldbus-Daten die für die Steuerelektronik bestimmten Daten an die Steuerelektronik übermittelt.

4. Elektromotor nach einem der vorangegangenen Ansprüche,
**dadurch gekennzeichnet, dass**
die Hybridkabel jeweils mindestens Kleinspannungsleitungen und Niederspannungsleitungen umfassen, insbesondere wobei die Niederspannung mehr als 100 Volt beträgt, insbesondere wobei die Kleinspannung weniger als 50 Volt beträgt.

5. Elektromotor nach einem der vorangegangenen Ansprüche,
**dadurch gekennzeichnet, dass**
die Hybridkabel jeweils zusätzlich zu Kleinspannungsleitungen und Niederspannungsleitungen zumindest eine Busleitung umfassen, insbesondere wobei im Unterteil eine als Busteilnehmer ausgestaltete elektronische Schaltung, insbesondere ein Busprotokollumsetzer, angeordnet ist.

6. Elektromotor nach einem der vorangegangenen Ansprüche,
**dadurch gekennzeichnet, dass**
die Hybridgegensteckverbinderteile Kontaktteile, insbesondere Kontaktstifte, insbesondere nach außen weisende Kontaktstifte, für die Niederspannungsleitungen aufweisen, die in einer gemeinsamen Linie angeordnet sind, welche parallel oder senkrecht zur Motorachse orientiert ist.

7. Elektromotor nach einem der vorangegangenen Ansprüche,
**dadurch gekennzeichnet, dass**
jedes Hybridgegensteckverbinderteil Kontaktteile, insbesondere Kontaktstifte, insbesondere nach außen weisende Kontaktstifte, für Kleinspannungen aufweist, insbesondere die in einer Linie angeordnet sind.

8. Elektromotor nach einem der vorangegangenen Ansprüche,
**dadurch gekennzeichnet, dass**
Unterteil und Oberteil zumindest mittels einer elektrischen Steckverbindung verbunden sind, über welche die Niederspannungsleitungen zu einer elektronischen Schaltung geführt sind, welche an der Innenseite des Oberteils befestigt ist,
insbesondere wobei die Statorwicklungsleitungen über die elektrische Steckverbindung zur elektronischen Schaltung geführt sind,
insbesondere wobei die elektronische Schaltung eine Umrichterschaltung, eine Sanftanlaufschaltung oder ein Sternpunktschalter-Schaltung ist.

9. Anlage mit mindestens zwei Elektromotoren,
**wobei jeder Elektromotor einen Anschlusskasten aufweist, der ein auf dem Motorgehäuse befestigtes oder einstückig ausgeführtes Unterteil und ein darauf verbindbares Oberteil aufweist,**
**wobei an einer einzigen Seite des Unterteils mindestens zwei Hybridgegensteckverbinderteile angeordnet sind zur Steckverbindung mit entsprechenden Hybridsteckverbinderteilen, die an einem jeweiligen Hybridkabelende angeordnet sind,**
**wobei die im Hybridkabel geführten Leitungen im Unterteil vom ersten Hybridgegensteckverbinderteil zum zweiten Hybridgegensteckverbinderteil durchgeschleift sind,**
**wobei eine elektronische Schaltung im Anschlusskasten angeordnet ist, die eine Steuerelektronik umfasst zur Ansteuerung von Leistungshalbleiterschaltern, welche den Energiefluss von den Leitungen, insbesondere Niederspannungsleitungen, des Hybridkabels zum Motor steuern,**
**wobei die Steuerelektronik aus der Durchschleifung der Hybridleitungen, insbesondere aus den Kleinspannungsleitungen, versorgt ist**,
**wobei**
die Hybridgegensteckverbinderteile der oder aller Motoren parallel zueinander orientiert sind **und wobei die Hybridgegensteckverbinderteile der oder aller Motoren in einer Linie angeordnet sind**,
**wobei die Hybridgegensteckverbinderteile der oder aller Motoren von derselben Seite aus zugänglich sind,**
**wobei der Leitungsquerschnitt der Niederspannungsleitungen derart klein ist, dass die beiden am Anschlusskasten angeordneten Hybridgegensteckverbinderteile nebeneinander in der gleichen Linie wie die Kontaktteile der Niederspannungsleitungen angeordnet sind an derselben Seite des Anschlusskastens**.

10. Anlage nach einem der vorangegangenen Ansprüche,
**dadurch gekennzeichnet, dass**
die Motoren ein Fördermittel, insbesondere dasselbe Fördermittel, antreiben, insbesondere ein Fließband.

11. Anlage nach einem der vorangegangenen Ansprüche,
**dadurch gekennzeichnet, dass**
der Anschlusskasten den Motor nicht überragt, also die Seitenlänge des Anschlusskastens kleiner ist als der Durchmessers des Stators oder des den Stator umgebenden Motorgehäuses.

12. Anlage nach einem der vorangegangenen Ansprüche,
**dadurch gekennzeichnet, dass**
die Anzahl der seriell mittels der Niederspannungsleitungen versorgbaren Elektromotoren weniger als zwanzig, insbesondere zehn, beträgt.

## Claims

1. An electric motor, comprising a terminal box which has a lower part which is fastened to the motor housing or is formed in one piece, and an upper part which can be connected thereto,
**characterised in that**
at least two hybrid mating plug-in connector parts are arranged only on a single side of the lower part for plug-in connection with corresponding hybrid plug-in connector parts which are arranged on a respective hybrid cable end,
the lines which are guided in the hybrid cable in the lower part being looped through from the first hybrid mating plug-in connector part to the second hybrid mating plug-in connector part,
an electronic circuit being arranged in the terminal box, which circuit comprises control electronics for controlling power semiconductor switches which control the flow of energy from the lines, in particular low-voltage lines, of the hybrid cable to the motor,
the control electronics being supplied from the looping-through of the hybrid lines, in particular from the extra-low-voltage lines,
the hybrid mating plug-in connector parts being arranged in parallel orientation to one another,
the arrangement of the hybrid mating plug-in connector parts on the same side of the terminal box, embodied with correspondingly small line cross-sections and isolation distances, limits the number of electric motors which can be supplied in series by means of the looping-through, in particular to less than twenty, in particular to less than ten.

2. An electric motor according to Claim 1, **characterised in that** the lower part and motor housing part are formed in one piece and receive at least one bearing of the rotor shaft of the motor and/or a bearing of the output shaft of a transmission which is driven by the motor,
in particular with the rotor shaft and output shaft being arranged parallel,
in particular so that heat generated by the inverter, motor and/or transmission can be absorbed and distributed, in particular also via the lower part to the hybrid plug-in connector housing parts.

3. An electric motor according to one of the preceding claims, **characterised in that** a bus protocol converter is supplied from the looping-through of the extra-low-voltage lines, which converter is electrically connected to the control electronics and is connected to a field bus,
the bus protocol converter being embodied such that it transmits the data ascertained for the control electronics to the control electronics from the field-bus data.

4. An electric motor according to one of the preceding claims, **characterised in that** the hybrid cables in each case comprise at least extra-low-voltage lines and low-voltage lines, in particular the low voltage being more than 100 volts, in particular the extra-low voltage being less than 50 volts.

5. An electric motor according to one of the preceding claims, **characterised in that** the hybrid cables in each case in addition to extra-low-voltage lines and low-voltage lines comprise at least one bus line, in particular with an electronic circuit configured as a bus device, in particular a bus protocol converter, being arranged in the lower part.

6. An electric motor according to one of the preceding claims, **characterised in that** the hybrid mating plug-in connector parts have contact parts, in particular contact pins, in particular outward-facing contact pins, for the low-voltage lines, which are arranged in a common line which is oriented parallel or perpendicular to the motor axis.

7. An electric motor according to one of the preceding claims, **characterised in that** each hybrid mating plug-in connector part has contact parts, in particular contact pins, in particular outward-facing contact pins, for very low voltages, in particular which are arranged in one line.

8. An electric motor according to one of the preceding claims, **characterised in that** the lower part and upper part are connected at least by means of an electrical plug-in connection, via which the low-voltage lines are guided to an electronic circuit which is fastened to the inner side of the upper part,
in particular the stator winding lines being guided via the electrical plug-in connection to the electronic circuit,
in particular the electronic circuit being an inverter circuit, a soft-start circuit or a neutral-point switch circuit.

9. An installation with at least two electric motors,
each electric motor having a terminal box which has a lower part which is fastened to the motor housing or is formed in one piece, and an upper part which can be connected thereto,
at least two hybrid mating plug-in connector parts being arranged on a single side of the lower part for plug-in connection with corresponding hybrid plug-in connector parts which are arranged on a respective hybrid cable end,
the lines which are guided in the hybrid cable in the lower part being looped through from the first hybrid mating plug-in connector part to the second hybrid mating plug-in connector part,
an electronic circuit being arranged in the terminal box, which circuit comprises control electronics for controlling power semiconductor switches which control the flow of energy from the lines, in particular low-voltage lines, of the hybrid cable to the motor,
the control electronics being supplied from the looping-through of the hybrid lines, in particular from the extra-low-voltage lines,
the hybrid mating plug-in connector parts of the or of all the motors being oriented parallel to one another
and the hybrid mating plug-in connector parts of the or of all the motors being arranged in one line,
the hybrid mating plug-in connector parts of the or of all the motors being accessible from the same side,
the line cross-section of the low-voltage lines being so small that the two hybrid mating plug-in connector parts arranged on the terminal box are arranged next to one another in the same line as the contact parts of the low-voltage lines on the same side of the terminal box.

10. An installation according to one of the preceding claims, **characterised in that** the motors drive a conveying means, in particular the same conveying means, in particular an assembly line.

11. An installation according to one of the preceding claims, **characterised in that** the terminal box does not protrude over the motor, therefore the side length of the terminal box is smaller than the diameter of the stator or of the motor housing surrounding the stator.

12. An installation according to one of the preceding claims, **characterised in that** the number of the electric motors which can be supplied in series by means of the low-voltage lines is less than twenty, in particular ten.

## Revendications

1. Moteur électrique, comprenant une boîte de raccordement qui présente une partie inférieure fixée sur le boîtier du moteur ou monobloc avec celui-ci et une partie supérieure pouvant être assemblée sur la partie inférieure,
**caractérisé en ce qu'**au moins deux éléments connecteurs complémentaires hybrides sont disposés sur un seul côté de la partie inférieure afin d'être connectés à des éléments connecteurs hybrides correspondants qui sont disposés à une extrémité de câble hybride respective,
sachant que les lignes dirigées dans le câble hybride dans la partie inférieure forment une boucle du premier élément connecteur hybride complémentaire au deuxième élément connecteur hybride complémentaire,
sachant qu'un montage électrique est disposé dans la boîte de raccordement, montage qui comprend un équipement électronique de commande destiné à commander des disjoncteurs semi-conducteurs de puissance qui commandent le flux d'énergie allant des lignes, lignes à basse tension notamment, du câble hybride au moteur,
sachant que l'équipement électronique de commande est alimenté à partir de la boucle des lignes hybrides, en particulier à partir des lignes à très basse tension,
sachant que les éléments connecteurs complémentaires hybrides sont disposés en étant orientés parallèlement entre eux,
sachant que la disposition des éléments connecteurs complémentaires hybrides sur le même côté de la boîte de raccordement, réalisée avec des sections de ligne et des distances d'isolation d'une petite taille correspondante, produit une limitation du nombre de moteurs électriques pouvant être alimentés en série au moyen de la boucle, en particulier à moins de vingt, notamment à moins de dix.

2. Moteur électrique selon la revendication 1, **caractérisé en ce que** la partie inférieure et la partie de boîtier de moteur sont réalisées d'un seul tenant et reçoivent au moins un palier de l'arbre de rotor du moteur et/ou un palier de l'arbre de sortie d'une transmission entraînée par le moteur,
sachant notamment que l'arbre de rotor et l'arbre de sortie sont disposés en parallèle,
en particulier de telle sorte que la chaleur produite par le convertisseur, le moteur et/ou la transmission peut être absorbée et répartie, en particulier également par l'intermédiaire de la partie inférieure sur les parties de boîtier à connecteurs hybrides.

3. Moteur électrique selon l'une des revendications précédentes, **caractérisé en ce qu'**un convertisseur de protocole de bus est alimenté à partir de la boucle des lignes à très basse tension, convertisseur qui est relié électriquement à l'équipement électronique de commande et est raccordé à un bus de terrain,
sachant que le convertisseur de protocole de bus est réalisé de telle sorte qu'il transmet à l'équipement électronique de commande, à partir des données de bus de terrain, les données destinées à l'équipement électronique de commande.

4. Moteur électrique selon l'une des revendications précédentes, **caractérisé en ce que** les câbles hybrides comprennent chacun au moins des lignes à très basse tension et des lignes à basse tension, sachant notamment que la basse tension est supérieure à 100 Volts, sachant notamment que la très basse tension est inférieure à 50 Volts.

5. Moteur électrique selon l'une des revendications précédentes, **caractérisé en ce que** les câbles hybrides comprennent chacun au moins une ligne de bus en plus des lignes à très basse tension et des lignes à basse tension, sachant notamment qu'un montage électronique conçu comme participant au bus, en particulier un convertisseur de protocole de bus, est disposé dans la partie inférieure.

6. Moteur électrique selon l'une des revendications précédentes, **caractérisé en ce que** les éléments connecteurs complémentaires hybrides présentent des pièces de contact, notamment des broches de contact, en particulier des broches de contact dirigées vers l'extérieur, pour les lignes à basse tension, pièces qui sont disposées sur une ligne commune qui est orientée parallèlement ou perpendiculairement à l'axe du moteur.

7. Moteur électrique selon l'une des revendications précédentes, **caractérisé en ce que** chaque élément connecteur complémentaire hybride présente des pièces de contact, notamment des broches de contact, en particulier des broches de contact dirigées vers l'extérieur, pour les très basses tensions, pièces qui sont notamment disposées sur une ligne.

8. Moteur électrique selon l'une des revendications précédentes, **caractérisé en ce que** la partie inférieure et la partie supérieure sont au moins reliées au moyen d'une liaison électrique enfichable, par l'intermédiaire de laquelle les lignes à basse tension sont dirigées vers un montage électronique qui est fixé sur le côté intérieur de la partie supérieure,
sachant notamment que les lignes de bobinage de stator sont dirigées vers le montage électronique par l'intermédiaire de la liaison électrique enfichable,
sachant notamment que le montage électronique est un montage convertisseur, un montage de démarrage souple ou un montage de commutateur de neutre.

9. Installation équipée d'au moins deux moteurs électriques,
sachant que chaque moteur électrique comprend une boîte de raccordement qui présente une partie inférieure fixée sur le boîtier du moteur ou monobloc avec celui-ci et une partie supérieure pouvant être assemblée sur la partie inférieure,
sachant qu'au moins deux éléments connecteurs complémentaires hybrides sont disposés sur un seul côté de la partie inférieure afin d'être connectés à des éléments connecteurs hybrides correspondants qui sont disposés à une extrémité de câble hybride respective, sachant que les lignes dirigées dans le câble hybride dans la partie inférieure forment une boucle du premier élément connecteur hybride complémentaire au deuxième élément connecteur hybride complémentaire,
sachant qu'un montage électrique est disposé dans la boîte de raccordement, montage qui comprend un équipement électronique de commande destiné à commander des disjoncteurs semi-conducteurs de puissance qui commandent le flux d'énergie allant des lignes, lignes à basse tension notamment, du câble hybride au moteur,
sachant que l'équipement électronique de commande est alimenté à partir de la boucle des lignes hybrides, en particulier à partir des lignes à très basse tension,
sachant que les éléments connecteurs complémentaires hybrides des moteurs ou de tous les moteurs sont orientés parallèlement entre eux,
et sachant que les éléments connecteurs complémentaires hybrides des moteurs ou de tous les moteurs sont disposés sur une ligne,
sachant que les éléments connecteurs complémentaires hybrides des moteurs ou de tous les moteurs sont accessibles à partir du même côté,
sachant que la section de ligne des lignes à basse tension est d'une taille d'une petitesse telle que les deux éléments connecteurs complémentaires hybrides disposés sur la boîte de raccordement sont disposés en juxtaposition sur la même ligne que les pièces de contact des lignes à basse tension, sur le même côté de la boîte de raccordement.

10. Installation selon l'une des revendications précédentes, **caractérisée en ce que** les moteurs entraînent un moyen de transport, en particulier le même moyen de transport, notamment une chaîne de fabrication.

11. Installation selon l'une des revendications précédentes, **caractérisée en ce que** la boîte de raccordement ne dépasse pas du moteur, donc la longueur des côtés de la boîte de raccordement est inférieure au diamètre du stator ou du boîtier de moteur entourant le stator.

12. Installation selon l'une des revendications précédentes, **caractérisée en ce que** le nombre de moteurs électriques pouvant être alimentés en série au moyen des lignes à basse tension est inférieur à vingt, en particulier à dix.
